# EUROPEAN PATENT SPECIFICATION

(11) **EP 4 307 098 B1**
(45) Date of publication and mention of the grant of the patent: **04.02.2026**
(21) Application number: 23163468.4
(22) Date of filing: 22.03.2023
(51) Int. Cl.: G06F 3/12

(54) **PRINT MANAGEMENT SYSTEM, PROGRAM, AND PRINT MANAGEMENT METHOD**
DRUCKVERWALTUNGSSYSTEM, PROGRAMM UND DRUCKVERWALTUNGSVERFAHREN
SYSTÈME DE GESTION D'IMPRESSION, PROGRAMME ET PROCÉDÉ DE GESTION D'IMPRESSION

(30) Priority: 14.07.2022 JP 2022112913
(43) Date of publication of application: 17.01.2024
(73) Proprietor: FUJIFILM Business Innovation Corp., Minato-ku Tokyo (JP)
(72) Inventor: MATSUI, Takao, Yokohama-shi, Kanagawa (JP)
(74) Representative: Kurig, Thomas

(56) References cited:
- US-A1- 2002 163 666
- US-A1- 2018 039 462
- US-A1- 2018 335 983

## Description

### BACKGROUND OF THE INVENTION

### (i) Field of the Invention

The present invention relates to a print management system, a program, and a print management method.

### (ii) Description of Related Art

In the related art, a technique in which one printer group with a plurality of printers is configured and a print job is allocated to a printer capable of most rapidly performing a print according to a state of the printer is proposed.

In JP2019-211999A, a printing step management system connected with an output management apparatus that processes a job consisting of a plurality of pages on each printer in a distribution manner and a plurality of image processing apparatuses that print an image for each page according to an instruction from the output management apparatus through a network is described. The output management apparatus creates an output map to be used by a user to collect a printout from each printer. The output map includes page information related to a page output to each printer for each printer. Further, in the output map, the page information is arranged in an output order or the printers are arranged in a collection order.

In US 2002/163666 A1, a distributed printing control apparatus id disclosed, connected with a plurality of printers that distributes print data of interest generated by an application program. The distributed printing control apparatus converts the distributed print data into output data suitable for each of the printers via a printer driver provided for each printer, and transmits the converted output data to each printer.

In US 2018/039462 A1, a system comprising an image forming apparatus and a control apparatus configured to control the image forming apparatus are disclosed. The control apparatus includes a selection unit configured to select a job from job histories, and a transmission unit configured to transmit, to the image forming apparatus corresponding to the job selected by the selection unit. The image forming apparatus includes an indicator light and a reception unit configured to receive the signal transmitted by the transmission unit, and a control unit configured to control turn-on of the indicator light based on the signal received by the reception unit.

In US 2018/335983 A1, a control device to control an image forming system having an image forming apparatus is disclosed to form an image onto a sheet based on an image forming job. The control device includes a sheet discharge apparatus having a plurality of stacking trays onto which the sheet having the image formed thereon is to be stacked.

### SUMMARY OF THE INVENTION

In a case where a print job is executed, for example, a plurality of print jobs are grouped together as a group job, in some cases. Since a print order of the group job is determined, the group job is normally executed by one printing machine and printing efficiency is lowered, as compared with a case where the print is performed by a plurality of printing machines. On the other hand, in a case where the group job is executed on the plurality of printing machines, it is necessary for an operator to collect printouts, so there is a risk that the operator will make a mistake in a collection order, and the collected printouts will be printed in an order different from the original group job.

According to the exemplary embodiment of the present invention, even in a case where a print job is divided and executed by a plurality of printing machines, an operator can collect a printout (paper after printing) in a print order designated in the print job before the division.

The present invention is provided by the appended claims. The following disclosure serves a better understanding of the present invention.

According to a first aspect of the present disclosure, there is provided a print management system according to claim 1.

According to a second aspect, there is provided a computer program according to claim 11.

According to a third aspect, there is provided a print management method according to claim 12.

### BRIEF DESCRIPTION OF THE DRAWINGS

Exemplary embodiment(s) of the present invention will be described in detail based on the following figures, wherein:
Fig. 1 is a functional block diagram of an exemplary embodiment;
Fig. 2 is a configuration block diagram of the exemplary embodiment;
Fig. 3 is an explanatory diagram of distribution of print jobs;
Fig. 4 is an explanatory diagram of transmission of a group job;
Fig. 5 is an explanatory diagram of distribution of the group job;
Fig. 6 is an explanatory diagram of an output of a printout in Fig. 5;
Fig. 7 is a display explanatory diagram (part 1) of the exemplary embodiment;
Fig. 8 is a display explanatory diagram (part 2) of the exemplary embodiment;
Fig. 9 is an explanatory diagram of distribution of a page division job;
Fig. 10 is a display explanatory diagram (part 3) of the exemplary embodiment;
Fig. 11 is an explanatory diagram of distribution of a number-of-copies spread job;
Fig. 12 is a display explanatory diagram (part 4) of the exemplary embodiment;
Fig. 13 is a display explanatory diagram (part 5) of the exemplary embodiment;
Fig. 14 is a processing flowchart (part 1) of the exemplary embodiment;
Fig. 15 is a processing flowchart (part 2) of the exemplary embodiment;
Fig. 16 is a processing flowchart (part 3) of the exemplary embodiment;
Fig. 17 is an explanatory diagram (part 1) of a collection order of jobs according to the exemplary embodiment;
Fig. 18 is an explanatory diagram (part 2) of the collection order of the jobs according to the exemplary embodiment;
Fig. 19 is a display explanatory diagram of Modification Example 1;
Fig. 20 is a display explanatory diagram (part 1) of Modification Example 2; and
Fig. 21 is a display explanatory diagram (part 2) of Modification Example 2.

### DETAILED DESCRIPTION OF THE INVENTION

Hereinafter, exemplary embodiments of the present invention will be described with reference to the drawings.

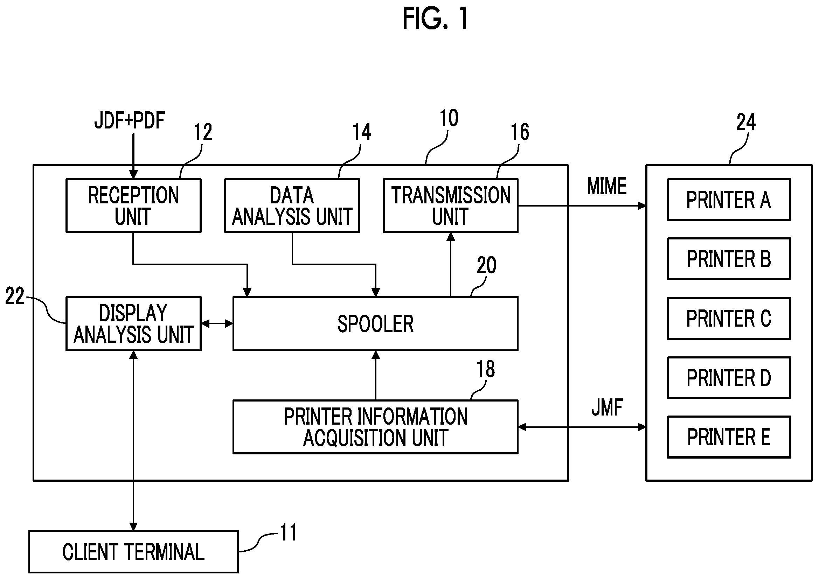

Fig. 1 illustrates a functional block diagram of a print management system according to the exemplary embodiment. The print management system includes a print management server 10, a client terminal 11, and a printer group 24 consisting of a plurality of printing machines (printers), which are connected by a communication line. The communication line is any line, and may be either wired or wireless, or may be either a dedicated line or a public line. An example of the communication line is the Internet, and the exemplary embodiment is not limited thereto.

The print management server 10 is a server computer that processes a print job, and acquires a print job from one or a plurality of client terminals 11 and appropriately distributes and transmits the print job to the printer group 24 consisting of the plurality of printers. The print management server 10 includes a reception unit 12, a data analysis unit 14, a transmission unit 16, a printer information acquisition unit 18, a spooler 20, and a display analysis unit 22, as functional blocks.

The reception unit 12 receives a portable document format (PDF) and a job definition format (JDF), as a print job from the client terminal 11. The JDF is a format for describing work information in an entire printing step, and describes a type of print job or an operation rule. The print management server 10 discriminates the type of print job by scanning information of the JDF. Specifically, by scanning the JDF, it is discriminated whether the print job is a group job, a page division job, or a number-of-copies spread job. Here, as will be described below, the "group job" is defined as a job in which a plurality of print jobs are grouped together. In addition, the "page division job" is defined as a plurality of print jobs obtained by dividing, in a case where the number of pages of a print job is large, the print job into any number of pages. Further, the "number-of-copies spread job" is defined as a job for printing a plurality of copies. The reception unit 12 stores the received PDF and JDF in the spooler 20.

The printer information acquisition unit 18 acquires information on the plurality of printers constituting the printer group 24. In Fig. 1, the printer group 24 is configured with five printers of a printer A, a printer B, a printer C, a printer D, and a printer E, and the number of printers is any number and is not particularly limited. The printer information acquisition unit 18 periodically acquires a status of each of the printer A, the printer B, the printer C, the printer D, and the printer E and the total number of pages of held jobs by using a job messaging format (JMF). The JMF is a communication protocol to be used in a JDF workflow. The printer information acquisition unit 18 stores the acquired printer information in the spooler 20.

The data analysis unit 14 determines which print job is to be distributed and transmitted to which printer, by using the printer information acquired by the printer information acquisition unit 18, and stores the information in the spooler 20.

The transmission unit 16 creates a multipurpose internet mail extensions (MIME) package from the PDF and the JDF, and transmits a print job to the printer determined by the data analysis unit 14.

The display analysis unit 22 receives the specific information of the print job selected by a user from the client terminal 11, and uses the information stored in the spooler 20 to determine necessity of designating a collection order of printouts as execution results of the print job and a collection order, and returns the necessity and the collection order to the client terminal 11. Specifically, the display analysis unit 22 creates a job ID of a print job selected by the user, a printer that executes the print job, and a collection order of printouts as execution results of the print job, and returns the job ID, the printer, and the collection order to the client terminal 11.

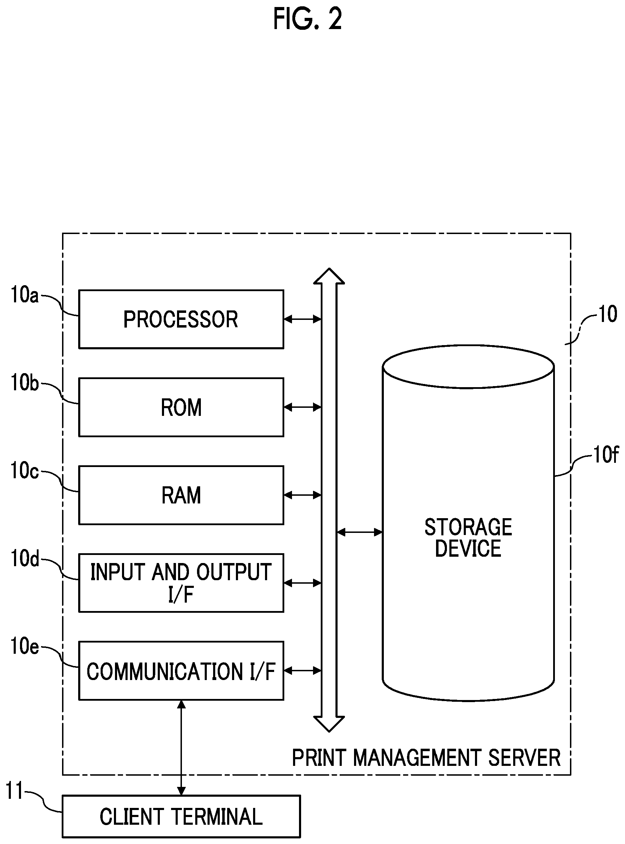

Fig. 2 illustrates a configuration block diagram of the print management server 10 in Fig. 1. The print management server 10 is configured with a server computer, and includes one or a plurality of processors 10a, a ROM 10b, a RAM 10c, an input and output interface (I/F) 10d, a communication interface (I/F) 10e, and a storage device 10f.

The processor 10a reads out a print management program stored in the ROM 10b or the storage device 10f, executes a series of processes by using the RAM 10c as a working memory, and appropriately distributes a print job received from the client terminal 11 and transmits the print job to the printer group 24 constituting the printer A to the printer E. In addition, the processor 10a periodically acquires printer information from the printers A to E. Further, the processor 10a creates display information according to selection information of the print job from the client terminal 11 and returns the display information to the client terminal 11. The processor 10a determines whether or not it is necessary to designate a collection order of printouts, according to a type of print job. In a case where it is necessary to designate the collection order, the processor 10a determines the collection order of the printouts and returns the collection order to the client terminal 11. The client terminal 11 displays the collection order determined by the processor 10a on a display device, and notifies the user.

The input and output I/F 10d is configured with an input device such as a keyboard or a touch switch, a display, or the like.

The communication I/F 10e is connected to the client terminal 11 or the printer group 24 via a communication line, and transmits and receives various types of data. A print job is received from the client terminal 11, and information on a collection order of printouts is returned to the client terminal 11. Further, the print job is transmitted to the printer group 24, and information such as a status of each printer or the total number of pages is periodically received.

The storage device 10f is configured with a volatile or non-volatile storage device, stores various programs such as a print control program, and stores information on a print job such as a PDF or a JDF, printer information, and the like.

The processor 10a implements the data analysis unit 14 and the display analysis unit 22 in Fig. 1, the communication I/F 10e implements the reception unit 12, the transmission unit 16, and the printer information acquisition unit 18, and the storage device 10f or the RAM 10c implements the spooler 20.

The print management server 10 in Fig. 1 and Fig. 2 may be implemented by one server computer, or may be implemented by a plurality of server computers connected to each other by a communication line.

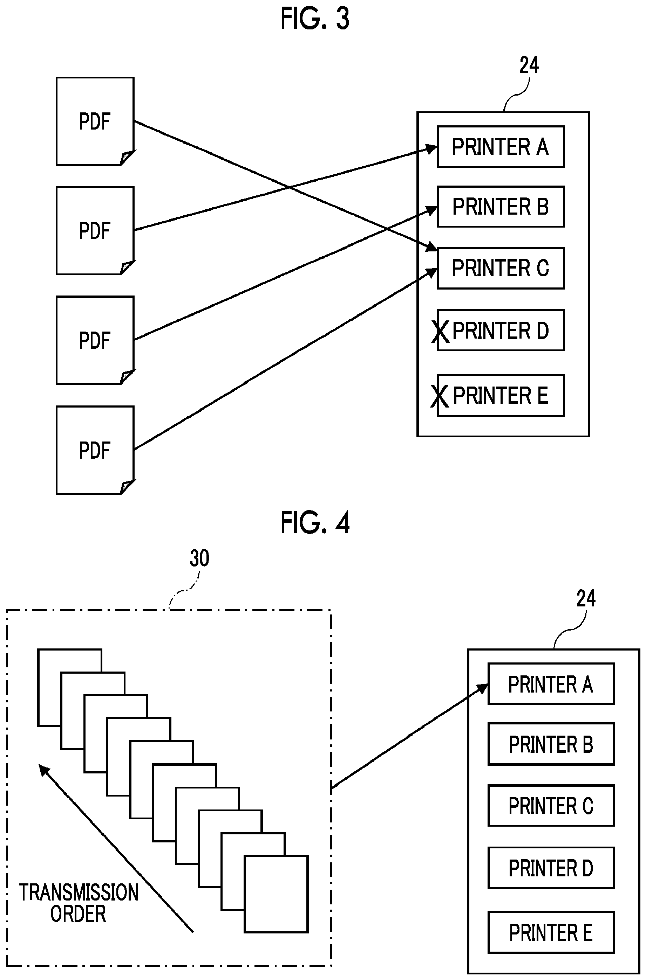

Fig. 3 schematically illustrates a basic process of the print management server 10. In a case where print jobs (in Fig. 3, the print job is schematically illustrated as a PDF) are received from the client terminal 11, the print jobs are distributed and transmitted to a printer capable of most rapidly performing a print according to statuses of a plurality of printers A to E constituting the printer group 24. It is assumed that the plurality of printers A to E constituting the printer group 24 have the identical model types and the identical settings, and the same output result can be obtained regardless of which printer prints.

Here, in a case where it is assumed that the statuses of the printer A to printer E are as follows,
printer A: waiting for printing status,
printer B: waiting for printing status,
printer C: waiting for printing status,
printer D: error status, and
printer E: error status,
the print management server 10 distributes and transmits a first print job to the printer C, distributes and transmits a second print job to the printer A, distributes and transmits a third print job to the printer B, and distributes and transmits a fourth print job to the printer C, according to these statuses of the printers A to E. The print jobs are not transmitted to the printer D and the printer E, which are in the error status.

Meanwhile, in a case where print jobs are distributed to a plurality of printers, it becomes difficult to know which output destination of which printer a printout is output as an execution result of the print job. Therefore, a burden on the operator who collects the printout is increased. On the other hand, in a case where the distribution is performed in consideration of collection, productivity of the printing work is lowered.

Further, in a case where a plurality of print jobs are treated as one group job, for example, in a case where the group job is distributed and executed by the plurality of printers with priority given to the productivity, a situation may occur in which the operator makes a mistake in a collection order of the printouts, which is an order different from the original order.

Fig. 4 to Fig. 6 schematically illustrate this situation.

Fig. 4 illustrates a process in a case where a print job is a group job. A group job 30 is defined as a job in which a plurality of print jobs are grouped together. In the group job 30, since a transmission order is determined, an order of reception by the printer is guaranteed. In a case of transmitting to the printer group 24, the group job 30 is transmitted to any one of the plurality of printers A to E constituting the printer group 24, for example, the printer A.

Meanwhile, in a case where the print job is transmitted to only one printer in the printer group 24, characteristics of the printer group 24 cannot be utilized and the productivity is lowered.

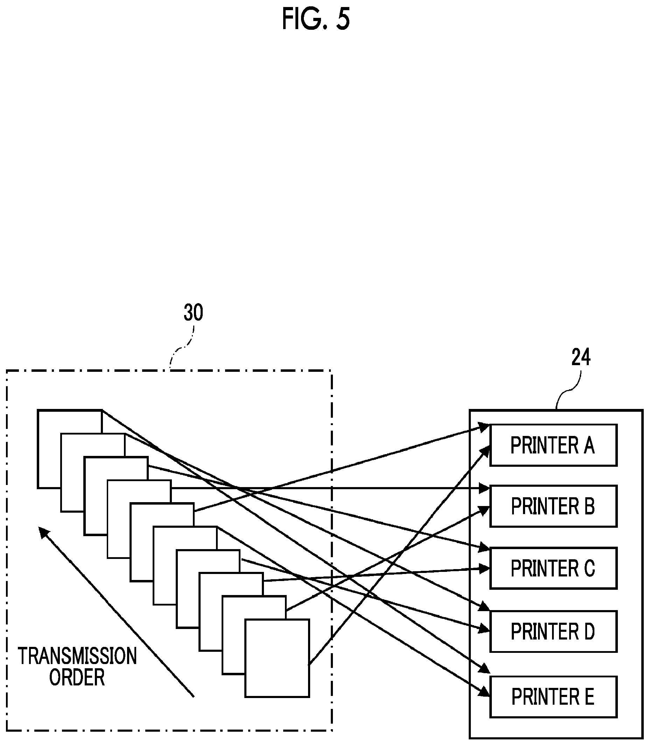

Therefore, as illustrated in Fig. 5, the group job 30 is decomposed into a plurality of print jobs, and a print instruction is given to each print job. For example, the group job 30 is decomposed into a first print job, a second print job, a third print job, a fourth print job, a fifth print job, ..., and the first print job is transmitted to the printer A, the second print job is transmitted to the printer B, the third print job is transmitted to the printer C, the fourth print job is transmitted to the printer D, the fifth print job is transmitted to the printer E, and the like. As a result, although the productivity is improved, the output order of the printouts which are the execution results of the print job is changed. Therefore, in a case where the operator collects the printouts, it is necessary to consider the print order of each job designated in the group job 30.

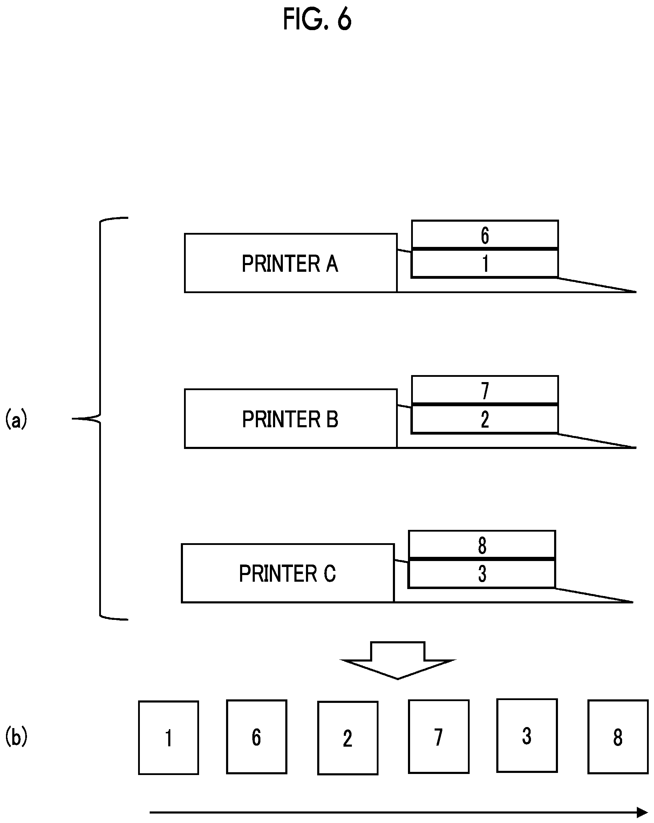

Fig. 6 illustrates an example of a printout output by the printer A, the printer B, and the printer C constituting the printer group 24. As illustrated in (a) of Fig. 6, the first print job obtained by decomposing the group job 30 is transmitted to the printer A, executed by the printer A, and output to an output tray as a "printout 1". The second print job obtained by decomposing the group job 30 is transmitted to the printer B, executed by the printer B, and output to an output tray as a "printout 2". The third print job obtained by decomposing the group job 30 is transmitted to the printer C, executed by the printer C, and output to an output tray as a "printout 3". Further, the sixth print job obtained by decomposing the group job 30 is transmitted to the printer A, executed by the printer A, and output to the output tray as a "printout 6". In addition, the seventh print job obtained by decomposing the group job 30 is transmitted to the printer B, executed by the printer B, and output to the output tray as a "printout 7". Further, the eighth print job obtained by decomposing the group job 30 is transmitted to the printer C, executed by the printer C, and output to the output tray as a "printout 8".

The printer A outputs the "printout 1" and the "printout 6" to the output tray, the printer B outputs the "printout 2" and the "printout 7" to the output tray, and the printer C outputs the "printout 3" and the "printout 8" to the output tray.

Therefore, as illustrated in (b) of Fig. 6, in a case where the operator simply collects the printouts from the output trays of the printer A, the printer B, and the printer C sequentially without providing any collection order, an order different from a transmission order in the related art is as follows.
"printout 1" - "printout 6" - "printout 2" - "printout 7" - "printout 3" - "printout 8"

The transmission order in the related art corresponding to the first print job, the second print job, the third print job, ... is as follows.
"printout 1" - "printout 2" - "printout 3" - ...

In view of the above problem, in a case where the print job is the group job 30, the processor 10a of the print management server 10 determines that it is necessary to designate a collection order of the printouts, and creates the collection order of the printouts and displays the collection order on the client terminal 11 to optimize and facilitate the collection work of the printouts.

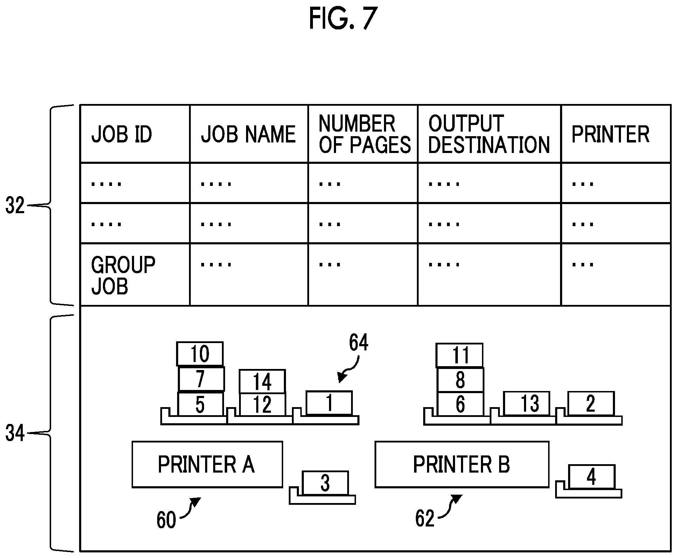

Fig. 7 illustrates an example of a screen displayed on the display device of the client terminal 11. A job list 32 is displayed in an upper part of the screen, and a printer list 34 is displayed in a lower part of the screen.

In the job list 32, a job ID, a job name, the number of pages, an output destination, and a printer name of a print job processed by the print management server 10 are displayed. The output destination designates an output tray of a printer, and is, for example, a "finisher output tray", a "stacker output tray 1", a "stacker output tray 2", or the like. The printer name is a name of the printer that executes the print job, and is the "printer A", the "printer B", or the like.

In the printer list 34, a plurality of printers constituting the printer group 24 are displayed together with the output trays thereof. In addition, a job for which a print is completed is displayed as a representational graphic (icon) imitating a printout in association with an output tray from which the printout is output. In Fig. 7, among the printers A to E constituting the printer group 24, only the printer A and the printer B are illustrated, for convenience of description.

The printer A is displayed as an icon 60, and the printer B is displayed as an icon 62. Further, an icon imitating a printout of the printer A and the printer B is displayed as a rectangular region in association with an output tray. A number assigned in the rectangular region as the icon of the printout is a job ID corresponding to the printout.

In the printer A,
it is assumed that job IDs = 1, 3, 5, 7, 10, 12, and 14, and
print jobs of the job IDs are executed, the icons of the printouts corresponding to these job IDs are displayed in association with the output tray of the printer A. Further, in the printer B,
it is assumed that job IDs = 2, 4, 6, 8, 11, and 13, and
print jobs of the job IDs are executed, the icons of the printouts corresponding to these job IDs are displayed in association with the output tray of the printer B.

In a case where the user operates the client terminal 11 and selects a required job from the job list 32 in the upper part of the screen, an icon of a printout corresponding to the job ID of the selected job is highlight-displayed in the printer list 34. For example, in a case where the user selects a print job with job ID = 6 from the job list 32 by a touch operation of a mouse or a touch panel, according to the selection operation from the user, the processor 10a highlight-displays an icon of a printout displayed in association with the output tray of the printer B since job ID = 6 is executed in the printer B. As another example of the highlight-display, the icon of the printout displayed in association with the output tray of the printer B may be enlarged and displayed, may be displayed in a blinking manner, or the like.

Here, in a specific output tray of the printer B, an icon of job ID = 8 and an icon of job ID = 11 are displayed, over the icon of job ID = 6. The operator makes the user recognize that the printout corresponding to job ID = 6 is output to the specific output tray of the printer B and a printout corresponding to job ID = 8 and a printout corresponding to job ID = 11 exist over the printout, by the user visually recognizing the screen displayed on the client terminal 11.

The client terminal 11 may also include a mobile terminal (for example, a smartphone or the like) carried by the operator. In this case, the operator collects a required printout while looking at a screen displayed on the mobile terminal carried by the operator.

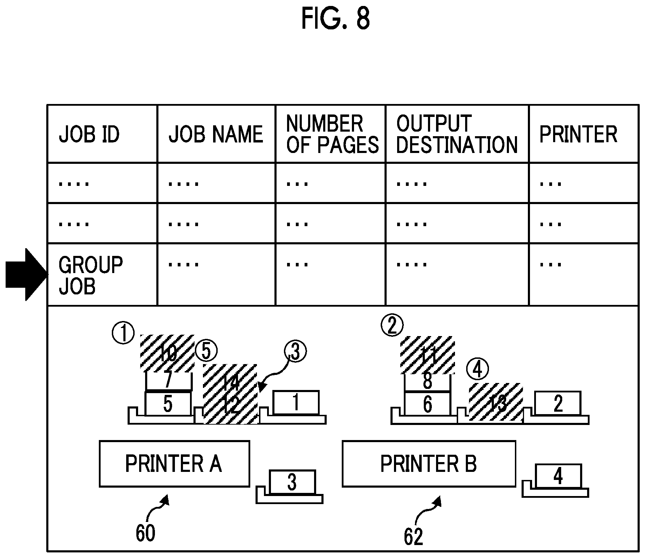

Fig. 8 illustrates a screen example in a case where the user selects a group job from the job list 32 in the screen example of the client terminal 11 illustrated in Fig. 7. The processor 10a highlight-displays icons of printouts corresponding to job IDs of all print jobs constituting the selected group job. For example, assuming that the print jobs constituting the group job have job IDs = 10, 11, 12, 13, and 14, according to a selection operation from the user, the processor 10a highlight-displays icons corresponding to job IDs = 10, 12, and 14 among the icons of the printouts displayed in association with the output tray of the printer A since job IDs = 10, 12, and 14 are executed by the printer A, and highlight-displays icons corresponding to job IDs = 11 and 13 among the icons of the printouts displayed in association with the output tray of printer B since job IDs = 11 and 13 are executed by the printer B.

Further, together with the highlight-display of the icon, a collection order of the highlight-displayed icon group as a target is displayed in association with the icon. In Fig. 6, the collection order is illustrated by displaying numbers (circled numbers) in the vicinity of the highlight-displayed icon group, and the exemplary embodiment is not limited thereto. In Fig. 6, a circled number 1 is attached to an icon of a printout corresponding to job ID = 10, a circled number 2 is attached to an icon of a printout corresponding to job ID = 11, a circled number 3 is attached to an icon of a printout corresponding to job ID = 12, a circled number 4 is attached to an icon of a printout corresponding to job ID = 13, and a circled number 5 is attached to an icon of a printout corresponding to job ID = 14.

The operator visually recognizes the collection order displayed by the circled numbers on the screen, and collects the printouts according to the collection order, so that the printouts can be collected in an order, which is the same as the order of the printouts in a case where the group job 30 is printed by one printer. That is, the operator first collects the printout corresponding to job ID = 10 from a specific output tray of the printer A, and then collects the printout corresponding to job ID = 11 from the specific output tray of the printer B, and then collects the printout corresponding to job ID = 12 from another output tray of the printer A, and the like.

In the screen example in Fig. 8, the icon of the printer that outputs the printout having the first collection order may be displayed on the leftmost side. In Fig. 8, since the first printout, that is, the printout corresponding to job ID = 10, is output from the printer A, the icon 60 of the printer A is displayed on the leftmost side. In a case where the first printout is output from the printer B, the icon 62 of the printer B may be displayed on the leftmost side.

The above is the description of the group job. Next, a page division job will be described as another print job.

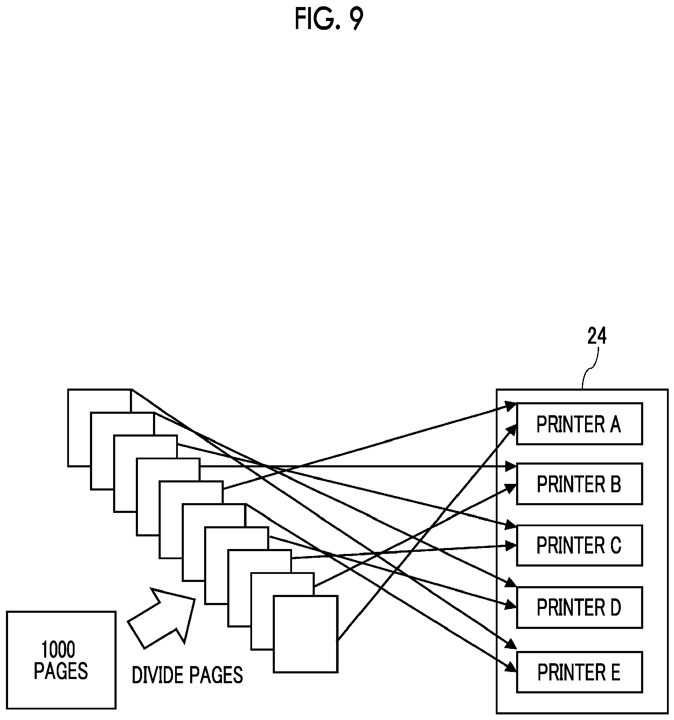

Fig. 9 schematically illustrates a process of the page division job. In a case where the number of pages of a certain print job is large, the print job is divided into any number of pages, and a plurality of print jobs are generated and the print job is distributed to a plurality of printers, so that the efficient print can be performed. For example, as illustrated in Fig. 9, a print job having 1000 pages is divided into any number of pages (for example, 100 pages each) to generate a plurality of print jobs, and each print job is distributed to and transmitted to the printers A and E. In this case as well, in the same manner as in the case of the group job 30, it is necessary to designate a collection order such that the collection order is a page order of the original print job.

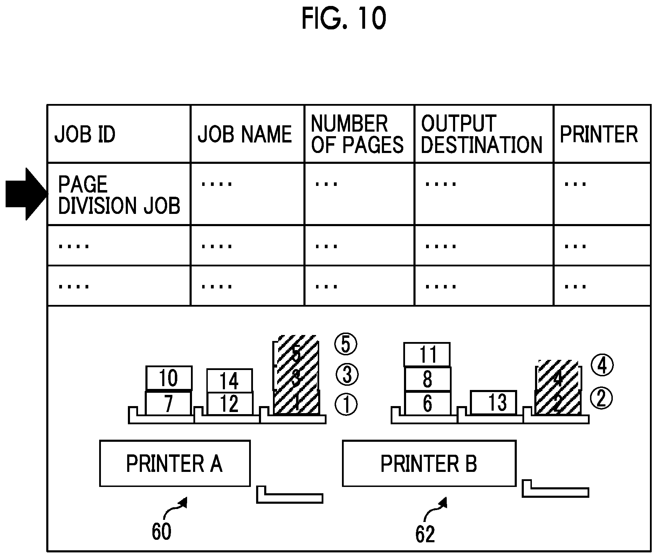

Fig. 10 illustrates a screen example in a case where the user selects a page division job from the job list 32 in the screen example of the client terminal 11 illustrated in Fig. 7. The processor 10a highlight-displays icons of printouts corresponding to job IDs of all print jobs constituting the selected page division job. For example, assuming that the print job constituting the page division job has job IDs = 1, 2, 3, 4, and 5, according to a selection operation from the user, the processor 10a highlight-displays icons corresponding to job IDs = 1, 3, and 5 among the icons of the printouts displayed in association with the output tray of the printer A since job IDs = 1, 3, and 5 are executed by the printer A, and highlight-displays icons corresponding to job IDs = 2 and 4 among the icons of the printouts displayed in association with the output tray of the printer B since job IDs = 2 and 4 are executed by the printer B.

Further, together with the highlight-display of the icon, a collection order of the highlight-displayed icon group as a target is displayed in association with the icon. In Fig. 10, a circled number 1 is attached to an icon of a printout corresponding to job ID = 1, a circled number 2 is attached to an icon of a printout corresponding to job ID = 2, a circled number 3 is attached to an icon of a printout corresponding to job ID = 3, a circled number 4 is attached to an icon of a printout corresponding to job ID = 4, and a circled number 5 is attached to an icon of a printout corresponding to job ID = 5.

By visually recognizing the collection order displayed by the circled numbers on the screen, and collecting the printouts according to the collection order, so that the operator can collect the printouts in a page order of the print job before the page division. That is, the operator first collects the printout corresponding to job ID = 1 from the specific output tray of the printer A, and then collects the printout corresponding to job ID = 2 from the specific output tray of the printer B, and then collects the printout corresponding to job ID = 3 from the specific output tray of the printer A, and the like.

Next, a number-of-copies spread job will be further described as another print job.

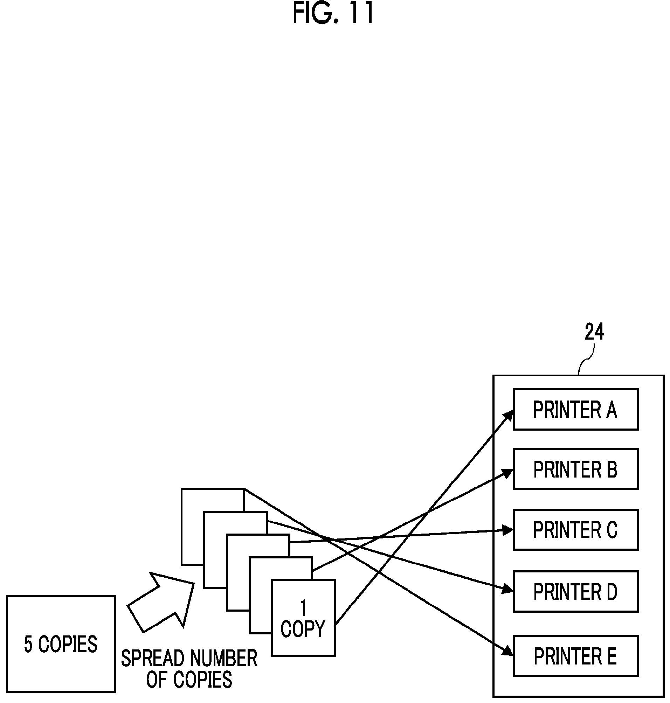

Fig. 11 schematically illustrates a process of the number-of-copies spread job. In a case where a large number of copies are printed, efficiency is lowered in a case where the print is performed by one printer. Meanwhile, the print can be efficiently performed by dividing each copy into a print job and distributing the jobs to a plurality of printers. Further, in this case, since contents are identical regardless of a number of the copy, it is not necessary to designate a collection order.

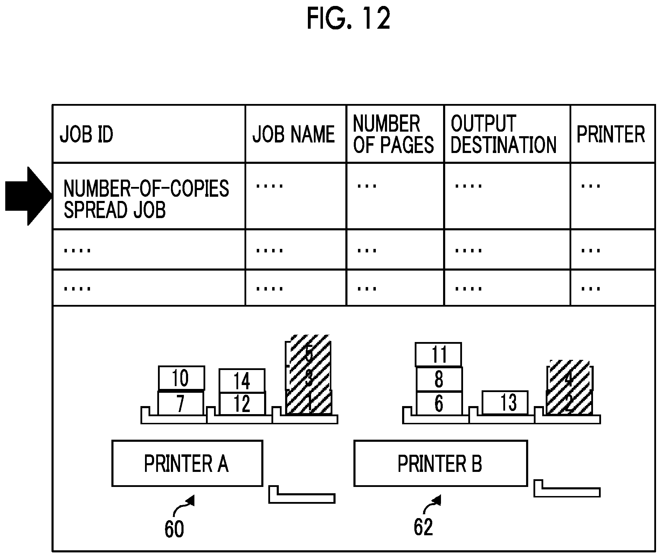

Fig. 12 illustrates an example of a screen in a case where the user selects a number-of-copies spread job from the job list 32 in the screen example of the client terminal illustrated in Fig. 7. The processor 10a highlight-displays icons of printouts corresponding to job IDs of all print jobs constituting the selected number-of-copies spread job. For example, assuming that the print job constituting the number-of-copies spread job has job IDs = 1, 2, 3, 4, and 5, according to a selection operation from the user, the processor 10a highlight-displays icons corresponding to job IDs = 1, 3, and 5 among the icons of the printouts displayed in association with the output tray of the printer A since job IDs = 1, 3, and 5 are executed by the printer A, and highlight-displays icons corresponding to job IDs = 2 and 4 among the icons of the printouts displayed in association with the output tray of the printer B since job IDs = 2 and 4 are executed by the printer B.

At this time, the processor 10a determines that it is not necessary to designate a collection order since the job is a number-of-copies spread job, and does not display circled numbers in association with the icons.

The processor 10a may designate the collection order in the number-of-copies spread job in accordance with a predetermined operation rule. The predetermined operation rule is as follows, for example,
· Priority order
· Delivery date order
· Order of distance from collection location after collection
· Order of movement distance of operator
or the like. Here, the order of distance from collection location after collection means a collection order in which a printer closest to the collection location after collection is a final collection location. In addition, the order of movement distance of operator means a collection order in which the movement distance of the operator is the shortest. The priority or the delivery date can be designated by being described in the JDF. Further, regarding the distance from collection location after collection or the movement distance of operator, installation position information of the printer included in information of the printers A to E can be used.

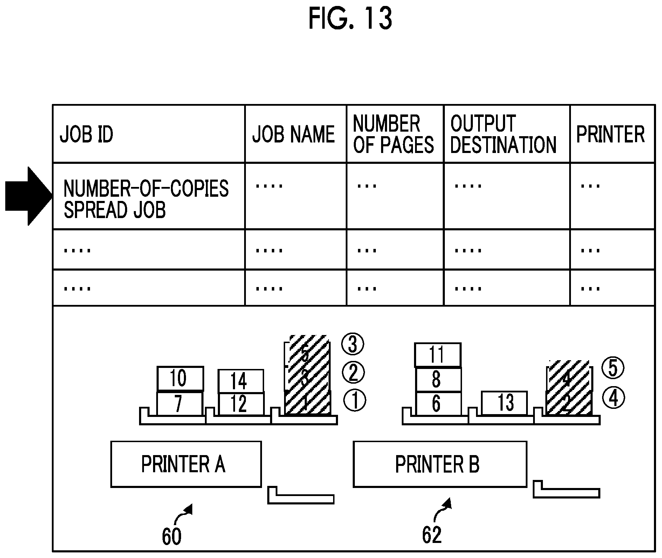

Fig. 13 illustrates a screen example in which, in the screen example of Fig. 12, the processor 10a designates and displays the collection order in the number-of-copies spread job according to the predetermined operation rule. In the same manner as Fig. 12, the icons of the printouts output by the print job constituting the number-of-copies spread job is highlight-displayed, and at the same time, the collection order is displayed as circled numbers in the order of distance from collection location after collection. In the printer A and the printer B, in a case where the printer B is closer to the collection location after collection, circled numbers 1, 2, and 3 are added in association with the icons of the printouts of the printer A, and circled numbers 4 and 5 are added in association with the icons of the printouts of the printer B.

Which of the display modes in Fig. 12 and Fig. 13 is to be displayed may be preset by the print management server 10, or may be configured to be appropriately selected by the user. For example, the collection order is not designated by default, and the collection order is switched to be displayed according to a selection of the user.

In this manner, in the present exemplary embodiment, the processor 10a of the print management server 10 discriminates whether a print job is a group job, a page division job, or a number-of-copies spread job. In a case where the print job is a group job or a page division job, the processor 10a determines that it is necessary to designate a collection order, and displays the collection order in association with an icon indicating to which the output tray of the printer the printout is output. In a case where the print job is a number-of-copies spread job, the processor 10a determines that it is unnecessary to designate a collection order, and does not display the collection order, or displays the collection order according to the predetermined operation rule.

Next, an overall flow of the process in the print management server 10 will be described.

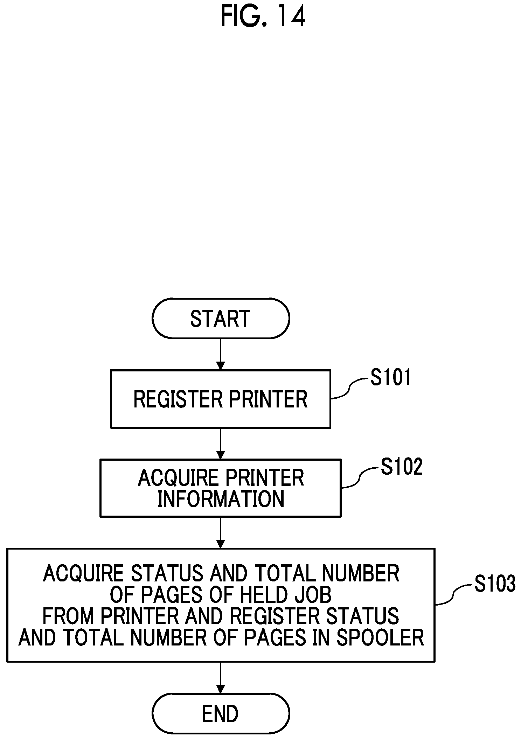

Fig. 14 is a flowchart of a printer information acquisition process executed by the processor 10a of the print management server 10.

First, the processor 10a registers a plurality of printers (printers A to E) constituting the printer group 24 in the spooler 20 (S101). Specifically, a name of the printer, a name of an output tray, or the like may be included, and an installation position of the printer may be included.

Next, the processor 10a periodically acquires information of each printer (S102), and registers the information in the spooler (S103). The information of each printer is specifically a status, the total number of pages of a held job, or the like of the printer. The processor 10a periodically acquires the information, and updates the registration information of the spooler 20.

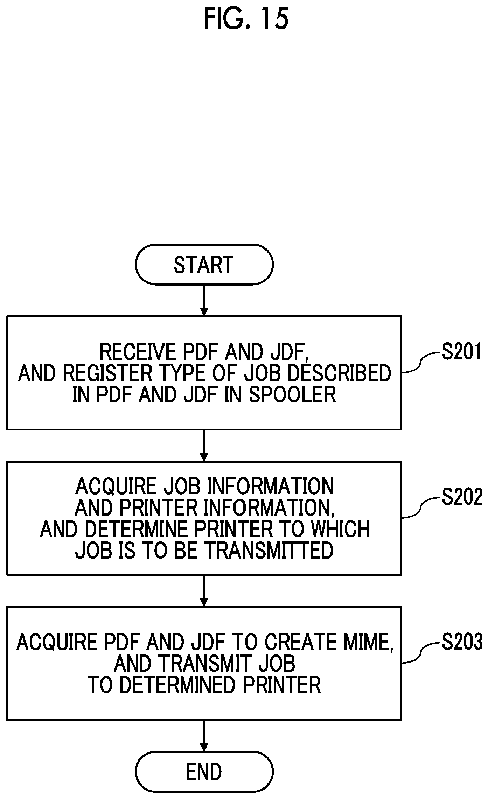

Fig. 15 is a flowchart of a print job transmission process executed by the processor 10a.

First, the processor 10a receives a PDF and a JDF as a print job at any timing from the client terminal 11, registers the PDF and the JDF in the spooler 20, and registers a type of print job described in the PDF and the JDF in the spooler 20 (S201). The type of print job is at least as follows.
· Group job
· Page division job
· Number-of-copies spread job
· Or the like

Next, the processor 10a determines a printer to which the print job is to be transmitted, from the job information and the printer information (S202). For example, in a case where the type of print job is a group job, the group job is decomposed into a plurality of print jobs constituting the group job, and each print job is distributed to the plurality of printers A to E based on the printer information. The processor 10a sequentially distributes the print job to a printer capable of most rapidly performing the print among the printers A and E. The print job is not distributed to a printer having an error status. The same manner is also applied to the case of the page division job, the number-of-copies spread job, and other jobs, and the print job is distributed to the plurality of printers A to E. Specifically, the manner is as follows,
Job with job ID = 1, job name = ..., number of pages = ... is distributed to printer A
Job with job ID = 2, job name = ..., number of pages = ... is distributed to printer B
Job with job ID = 3, job name = ..., number of pages = ... is distributed to printer C
or the like. In a case where each print job is distributed to each printer, an output tray of the printer is also determined. The processor 10a registers a combination of the determined print job, printer, and output destination tray in the spooler 20.

Next, the processor 10a acquires the PDF and the JDF from the spooler 20 to create a MIME, and transmits a print job to each printer determined in S202 (S203). Each printer receives the MIME from the print management server 10, executes the print job, and outputs a printout to a designated output destination tray.

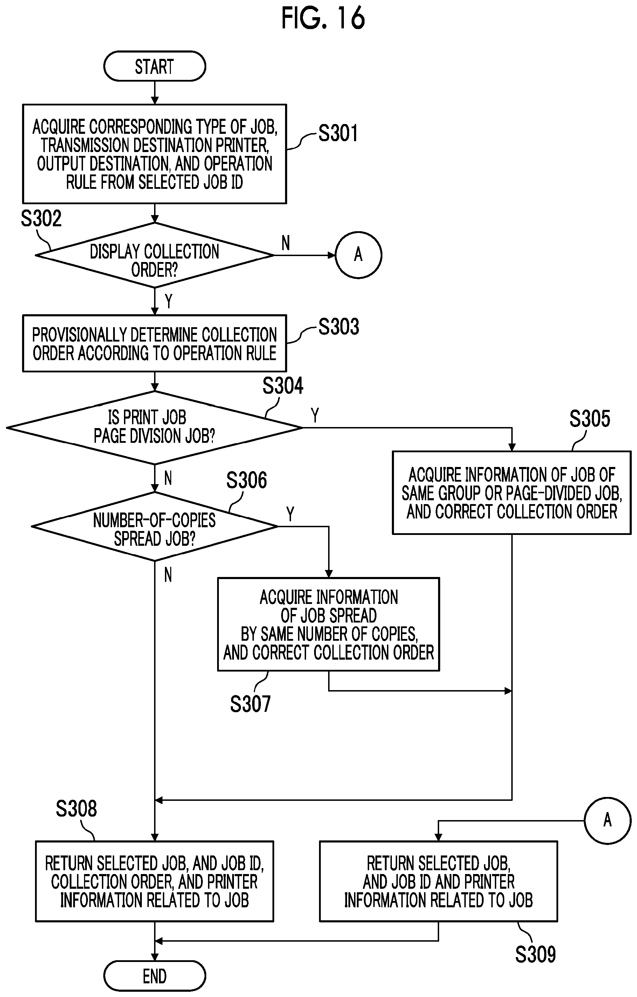

Fig. 16 illustrates a flowchart of a collection order display process executed by the processor 10a. Prior to this process, the processor 10a creates a display screen including the job list 32 and the printer list 34 by using the information registered in the spooler 20, and displays the display screen on the display device of the client terminal 11.

The user visually recognizes the screen (see Fig. 7) displayed on the display device of the client terminal 11, and selects a required print job from the job list 32.

The processor 10a receives a selection signal according to the selection operation of the user from the client terminal 11, and acquires a type of job, a transmission destination printer, an output tray, and an operation rule from a job ID of the job selected by the user, from the spooler 20 (S301).

The operation rule is registered in the predetermined spooler 20. In a case where the operation rule is described in the JDF of the print job, the operation rule is registered in the spooler 20.

Next, the processor 10a determines whether or not it is necessary to display a collection order of the job selected by the user based on the acquired type of job (S302). In a case where it is necessary to display the collection order (YES in S302), the collection order is provisionally determined according to the operation rule acquired in S301 (S303). In a case where there is no operation rule, the collection order is not provisionally determined.

The reason why the collection order is provisionally determined in S303 is that, as described above, in the group job or the page division job, the collection order is corrected according to an original transmission order or an original page order without depending on the operation rule.

Further, in S302, according to the type of print job, YES is determined since it is necessary to designate the collection order for the group job or the page division job. Meanwhile, in this process, YES is determined since it is necessary to designate the collection order even for the number-of-copies spread job. This is because the collection order according to the operation rule is displayed even in the number-of-copies spread job.

Next, it is discriminated whether the print job is a group job or a page division job (S304). In a case where the print job is a group job or a page division job, the processor 10a acquires information of a print job of the same group in a case of the group job, acquires information of a print job page-divided in a case of the page division job, and corrects the collection order provisionally determined in S303 (S305).

Next, in a case where the print job is neither a group job nor a page division job (NO in S304), next, it is discriminated whether the print job is a number-of-copies spread job (S306). In a case where the print job is a number-of-copies spread job, the processor 10a acquires information of a job spread by the same number of copies, and corrects the collection order provisionally determined in S303 (S307).

For example, in S303, it is assumed that the predetermined operation rule is an "output order". In this case, in S303, the "output order" is provisionally determined as a collection order of all printouts, regardless of the type of print job. In a case where the print job is a group job, the collection order is corrected according to the transmission order (see Fig. 5) of the plurality of print jobs constituting the group job. Further, in a case where the print job is a page division job, the collection order is corrected according to the page order (see Fig. 9) of the plurality of print jobs constituting the page division job. Further, in a case where the print job is a number-of-copies spread job and the operation rule described in the JDF is an order of distance from collection location after collection, the collection order is corrected according to the order of distance from collection location after collection. Of course, in a case where the predetermined operation rule in S303 and the operation rule of the number-of-copies spread job coincide with each other, it is not necessary to perform the correction in S307 and the operation rule is maintained in that state of the operation rule.

After appropriately collecting the collection order as described above, the processor 10a creates display screen information by using the job selected by the user and a job ID, a collection order, and printer information related to the job, and returns the display screen information to the client terminal 11 (S308). The client terminal 11 displays the information created by the processor 10a on the display device.

An example of the display screen created in this manner is the screen illustrated in Fig. 8, in which the print job selected by the user is highlight-displayed in the job list 32, and printer information (the icon 60 of the printer A that executes the print job, the icon 62 of the printer B, an icon 64 of a printout displayed in association with an output tray of the printer, a highlight-display of the icon 64 corresponding to the print job), a job ID (the job ID displayed in the icon), and a collection order (circled numbers displayed in the vicinity of the highlight-displayed icon 64) corresponding to the group job selected by the user are displayed in the printer list 34.

For example, it may be appropriate to unify the highlight-display in the job list 32 of the print job selected by the user and the highlight-display of the printout in the printer list 34 (for example, the same color is used).

The operator can check the job ID, the collection order, and the printer information displayed on the client terminal, and collect the printout according to a designated collection order.

Further, in NO in S302, that is, in a case where it is not necessary to display the collection order, the processor 10a simply returns the job selected by the user, the job ID associated with the job, and the printer information to the client terminal 11 (S309).

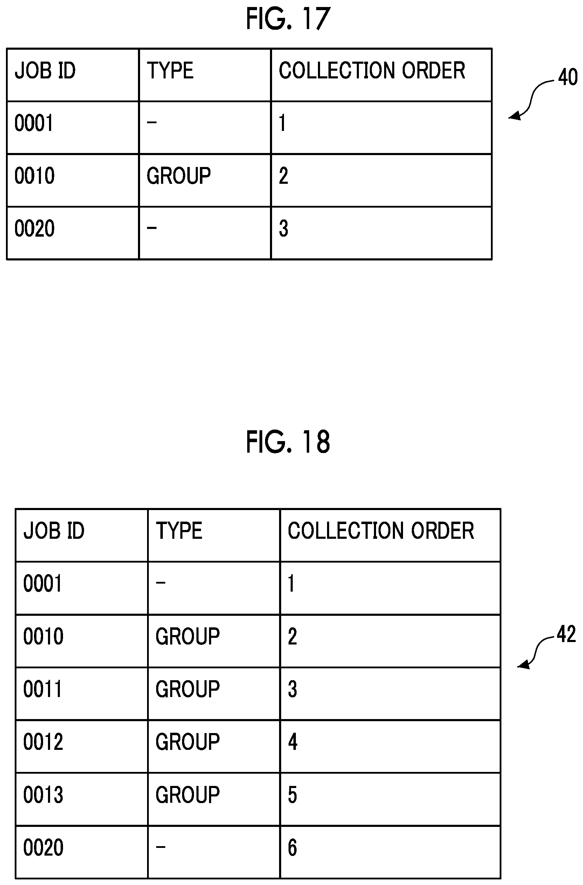

Fig. 17 illustrates an example of the collection order provisionally determined in S303. There are three print jobs with job IDs = 0001, 0010, and 0020, and a collection order of these jobs is provisionally determined in an output order, as follows.

| | |
|---|---|
| Job ID | collection order |
| 0001 | 1 |
| 0010 | 2 |
| 0020 | 3 |

Here, it is assumed that a type of print job specified by job ID = 0010 is a group job.

Fig. 18 illustrates an example of the collection order corrected in S305. Since the print job specified by job ID = 0010 is a group job, job IDs = 0011, 0012, and 0013 constituting the group job are newly added, and the collection order is newly set to correct the entire collection order. The collection order of the print jobs constituting the group job is continuous, and in a case of the collection order of the print job specified by job ID = 0020, the collection order is corrected from "3" to "6".

In the processing flowchart of Fig. 16, S303, S306, and S307 may be deleted, the collection order may be designated for the group job and the page division job in S304 and S305, and the collection order may not be designated for other jobs including the number-of-copies spread job.

As described above, in the present exemplary embodiment, according to a type of print job, it is determined whether or not it is necessary to designate a collection order of printouts in a case where the print job is executed by a plurality of printers. In a case where it is necessary to designate the collection order, the collection order of the printouts is displayed on the display device in job units, so that the operator can collect the printouts in an appropriate order while maintaining printing efficiency.

In the present exemplary embodiment, the type of print job is acquired from the information described in the JDF, and the type of print job may be acquired from information separately input by the user.

### <Modification Example 1>

In the exemplary embodiment, the job ID, the collection order, and the printer information are displayed on the client terminal 11. In addition to this, auxiliary information for facilitating the operator to collect the printout may be displayed.

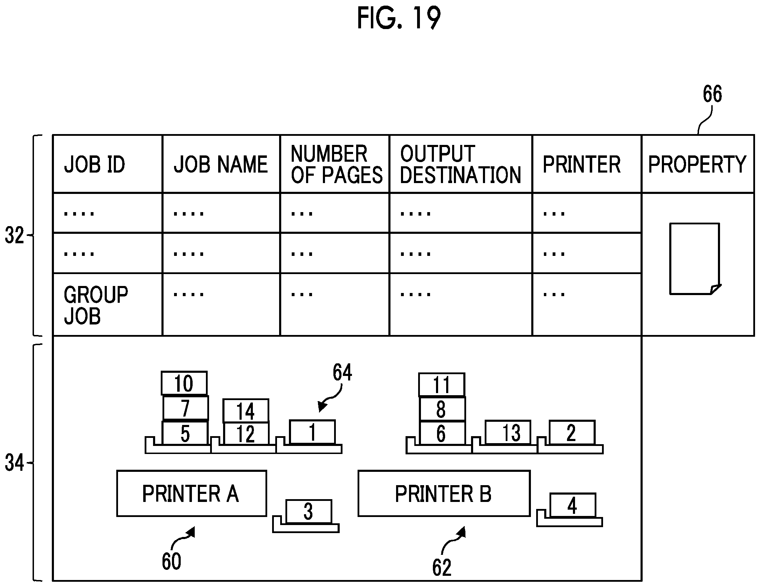

Fig. 19 illustrates an example of a screen of the client terminal 11. The job list 32 is displayed on an upper part of the screen, the printer list 34 is displayed on a lower part of the screen, and a job property 66 is displayed on a right side of the upper part of the screen. A thumbnail of the print job is displayed in the job property 66. Since the operator can check an image of a printout by visually recognizing a thumbnail displayed in the job property 66, an error in collecting the printout is prevented.

### <Modification Example 2>

In the exemplary embodiment, the job ID, the collection order, and the printer information are displayed on the client terminal 11. In addition to this, a progress status of collection of the printouts by the operator may be displayed.

The print job is a number-of-copies spread job, and the processor 10a displays the job list 32 and the printer list 34 as illustrated in Fig. 13, and displays a collection order indicated by the circled numbers 1 to 5 in association with the icons of the printouts.

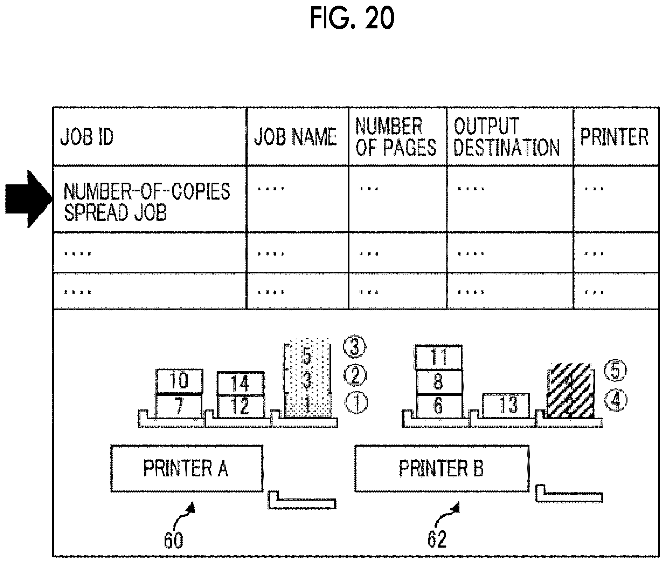

In a case where the operator collects the printout from the output tray of the printer A in accordance with the collection order illustrated in Fig. 13, a sensor of the output tray detects the collection of the printout, and transmits a collection detection signal to the print management server 10. The processor 10a receives the collection detection signal from the sensor, determines that the printout of the printer A is collected, and changes the display of the icon of the printout displayed in association with the output tray of the printer A, as illustrated in Fig. 20. A change mode of the display is any mode, such as changing a color of the highlight-display, changing a shape of the icon, and the like. For example, the color of the icon corresponding to the collected printout is changed from blue to yellow. Further, in Fig. 20, the color of the icon corresponding to the collected printout is changed, and the display of the collection order of the circled numbers 1 to 3 displayed in association with the icon is maintained in that state of the display. Meanwhile, the collection order may be updated by deleting these circled numbers 1 to 3 to reflect that the printouts are already collected.

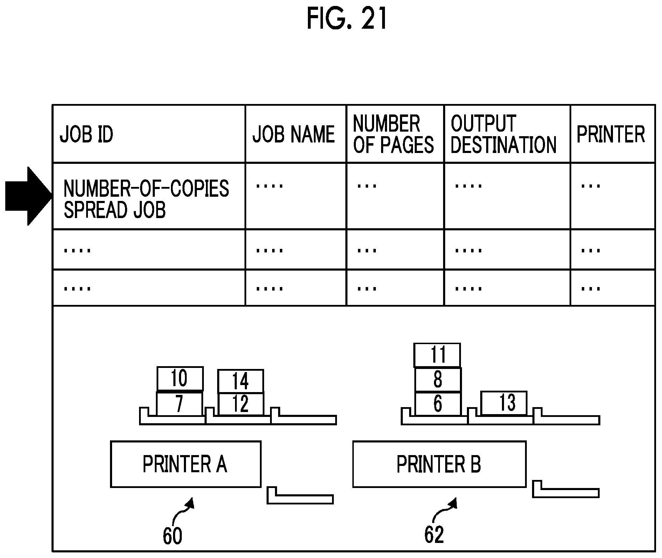

In a case where the operator further collects the printout from the output tray of the printer A according to the collection order and the collection of all the printouts is completed, the processor 10a receives a collection detection signal from the sensor, determines that all the printouts of the printer A and the printer B are collected, and deletes (hides) the icons of all the printouts and the circled numbers indicating the collection order of the print job, as illustrated in Fig. 21.

### <Modification Example 3>

In the exemplary embodiment, since the transmission order for the group job 30 is determined, an order of reception of the printer is guaranteed. Therefore, the print management server 10 determines the collection order in consideration of the transmission order. Meanwhile, the method of determining the collection order is not limited to this. For example, information related to the print order for the group job 30 may be described in the JDF, and the collection order may be determined based on the description.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

10: print management server
11: client terminal
12: reception unit
14: data analysis unit
16: transmission unit
18: printer information acquisition unit
20: spooler
22: display analysis unit

## Claims

1. A print management system comprising:
a processor (10); and
a display device,
wherein the processor (10) is configured to: by executing a program,
discriminate whether a print job is a group job (30), a page division job or a number-of-copies spread job to obtain a type of the print job;
determine whether or not it is necessary to designate a collection order of printouts in a case where the print job is executed by a plurality of printing machines (24), according to the type of the print job;
the print management system being **characterized in that** :the processor (10) is further configured to:
display the collection order of the printouts on the display device in a case where it is necessary to designate the collection order, and not display the collection order in a case where it is not necessary to designate a collection order; and
in a case where the type of print job is the number-of-copies spread job, display the collection order according to a predetermined operation rule on the display device, and the operation rule includes a movement distance of an operator

2. The print management system according to claim 1, wherein the processor (10) is configured to:
in a case where the type of print job is the group job (30), display the collection order of a plurality of jobs constituting the group job (30) on the display device.

3. The print management system according to claim 2, wherein the processor (10) is configured to:
display the collection order according to a print order of each job designated in the group job (30), on the display device.

4. The print management system according to claim 1, wherein the processor (10) is configured to:
in a case where the type of print job is the page division job, display the collection order of a plurality of jobs constituting the page division job on the display device.

5. The print management system according to claim 4, wherein the processor (10) is configured to:
display the collection order according to a predetermined page order of the print job on the display device.

6. The print management system according to claim 1, wherein the processor (10) is configured to:
in a case where the type of print job is the number-of-copies spread job, determine that it is not necessary to designate the collection order.

7. The print management system according to claim 1, wherein the processor (10) is configured to:
display a representational graphic of the printout in association with a printing machine at an output destination and an output tray of the printing machine, on the display device.

8. The print management system according to claim 7, wherein the processor (10) is configured to:
in a case where a printing result of a plurality of print jobs exists in the output tray, display the representational graphic for each of the plurality of print jobs, on the display device.

9. The print management system according to claim 7, wherein the processor (10) is configured to:
display a mark indicating the collection order in association with the representational graphic on the display device.

10. The print management system according to any one of claims 1 to 9, wherein the processor (10) is further configured to: by executing the program,
input that the printout is collected; and
update the collection order displayed on the display device according to the input.

11. A program comprising instructions which, when the program is executed by a processor (10) of a computer, cause the processor (10) to execute a process comprising:
discriminating whether a print job is a group job (30), a page division job or a number-of-copies spread job to obtain a type of the print job;
determining whether or not it is necessary to designate a collection order of printouts in a case where the print job is executed by a plurality of printing machines (24), according to the type of the print job;
the program being **characterized in that** it comprises instructions which cause the processor (10) to execute:
displaying the collection order of the printouts on a display device in a case where it is necessary to designate the collection order, and not displaying the collection order in a case where it is not necessary to designate a collection order; and
in a case where the type of print job is the number-of copies spread job, display the collection order according to a predetermined operation rule on the display device, and the operation rule includes a movement distance of an operator.

12. A print management method, comprising:
discriminating whether a print job is a group job (30), a page division job or a number-of-copies spread job to obtain a type of the print job;
determining whether or not it is necessary to designate a collection order of printouts in a case where the print job is executed by a plurality of printing machines (24), according to the type of the print job
the print management method being **characterized by**:
displaying the collection order of the printouts on a display device in a case where it is necessary to designate the collection order, and not displaying the collection order in a case where it is not necessary to designate a collection order; and
in a case where the type of print job is the number-of copies spread job, display the collection order according to a predetermined operation rule on the display device, and the operation rule includes a movement distance of an operator.

## Patentansprüche

1. Druckverwaltungssystem, umfassend:
einen Prozessor (10); und
eine Anzeigevorrichtung,
wobei der Prozessor (10) so konfiguriert ist, dass er: durch Ausführen eines Programms,
diskriminiert, ob ein Druckauftrag ein Gruppenauftrag (30), ein Seitenteilungsauftrag oder ein Verteilungsauftrag einiger Kopien ist, um einen Typ des Druckauftrags zu erhalten;
bestimmt, ob es notwendig ist oder nicht, eine Sammelreihenfolge von Ausdrucken in einem Fall, in dem der Druckauftrag von mehreren Druckmaschinen (24) ausgeführt wird, gemäß dem Typ des Druckauftrags zu designieren;
wobei das Druckverwaltungssystem **dadurch gekennzeichnet ist, dass**: der Prozessor (10) ferner so konfiguriert ist, dass er:
die Sammelreihenfolge der Ausdrucke auf einer Anzeigevorrichtung in einem Fall, in dem es notwendig ist, die Sammelreihenfolge zu designieren, anzeigt und die Sammelreihenfolge in einem Fall, in dem es nicht notwendig ist, eine Sammelreihenfolge zu designieren, nicht anzeigt; und
in einem Fall, in dem der Typ von Druckauftrag der Verteilungsauftrag einiger Kopien ist, die Sammelreihenfolge gemäß einer vorbestimmten Bedienungsregel auf der Anzeigevorrichtung anzeigt und die Bedienungsregel eine Bewegungsdistanz eines Bedieners enthält.

2. Druckverwaltungssystem nach Anspruch 1, wobei der Prozessor (10) so konfiguriert ist, dass er:
in einem Fall, in dem der Typ von Druckauftrag der Gruppenauftrag (30) ist, die Sammelreihenfolge von mehreren Aufträgen, die den Gruppenauftrag (30) bilden, auf der Anzeigevorrichtung anzeigt.

3. Druckverwaltungssystem nach Anspruch 2, wobei der Prozessor (10) so konfiguriert ist, dass er:
die Sammelreihenfolge gemäß einer Druckreihenfolge jedes in dem Gruppenauftrag (30) designierten Auftrags auf der Anzeigevorrichtung anzeigt.

4. Druckverwaltungssystem nach Anspruch 1, wobei der Prozessor (10) so konfiguriert ist, dass er:
in einem Fall, in dem der Typ von Druckauftrag der Seitenteilungsauftrag ist, die Sammelreihenfolge von mehreren Aufträgen, die den Seitenteilungsauftrag bilden, auf der Anzeigevorrichtung anzeigt.

5. Druckverwaltungssystem nach Anspruch 4, wobei der Prozessor (10) so konfiguriert ist, dass er:
die Sammelreihenfolge gemäß einer vorbestimmten Seitenreihenfolge des Druckauftrags auf der Anzeigevorrichtung anzeigt.

6. Druckverwaltungssystem nach Anspruch 1, wobei der Prozessor (10) so konfiguriert ist, dass er:
in einem Fall, in dem der Typ von Druckauftrag der Verteilungsauftrag einiger Kopien ist, bestimmt, dass es nicht notwendig ist, die Sammelreihenfolge zu designieren.

7. Druckverwaltungssystem nach Anspruch 1, wobei der Prozessor (10) so konfiguriert ist, dass er:
eine repräsentative Grafik des Ausdrucks in Verbindung mit einer Druckmaschine an einem Ausgabeziel und einem Ausgabefach der Druckmaschine auf der Anzeigevorrichtung anzeigt.

8. Druckverwaltungssystem nach Anspruch 7, wobei der Prozessor (10) so konfiguriert ist, dass er:
in einem Fall, in dem ein Druckergebnis von mehreren Druckaufträgen in dem Ausgabefach vorhanden ist, die repräsentative Grafik für jeden der mehreren Druckaufträge auf der Anzeigevorrichtung anzeigt.

9. Druckverwaltungssystem nach Anspruch 7, wobei der Prozessor (10) so konfiguriert ist, dass er:
eine Markierung, die die Sammelreihenfolge in Verbindung mit der repräsentativen Grafik auf der Anzeigevorrichtung angibt, anzeigt.

10. Druckverwaltungssystem nach einem der Ansprüche 1 bis 9, wobei der Prozessor (10) ferner so konfiguriert ist, dass er: durch Ausführen des Programms,
eingibt, dass der Ausdruck gesammelt wird; und
die auf der Anzeigevorrichtung angezeigte Sammelreihenfolge gemäß der Eingabe aktualisiert.

11. Programm, das Anweisungen umfasst, die, wenn das Programm von einem Prozessor (10) eines Computers ausgeführt wird, den Prozessor (10) veranlassen, einen Prozess auszuführen, der umfasst:
Diskriminieren, ob ein Druckauftrag ein Gruppenauftrag (30), ein Seitenteilungsauftrag oder ein Verteilungsauftrag einiger Kopien ist, um einen Typ des Druckauftrags zu erhalten;
Bestimmen, ob es notwendig ist oder nicht, eine Sammelreihenfolge von Ausdrucken in einem Fall, in dem der Druckauftrag von mehreren Druckmaschinen (24) ausgeführt wird, gemäß dem Typ des Druckauftrags zu designieren;
wobei das Programm **dadurch gekennzeichnet ist, dass** es Anweisungen umfasst, die den Prozessor (10) veranlassen, auszuführen:
Anzeigen der Sammelreihenfolge der Ausdrucke auf einer Anzeigevorrichtung in einem Fall, in dem es notwendig ist, die Sammelreihenfolge zu designieren, und kein Anzeigen der Sammelreihenfolge in einem Fall, in dem es nicht notwendig ist, eine Sammelreihenfolge zu designieren; und
in einem Fall, in dem der Typ von Druckauftrag der Verteilungsauftrag einiger Kopien ist, die Sammelreihenfolge gemäß einer vorbestimmten Bedienungsregel auf der Anzeigevorrichtung anzeigt und die Bedienungsregel eine Bewegungsdistanz eines Bedieners enthält.

12. Druckverwaltungsverfahren, umfassend:
Diskriminieren, ob ein Druckauftrag ein Gruppenauftrag (30), ein Seitenteilungsauftrag oder ein Verteilungsauftrag einiger Kopien ist, um einen Typ des Druckauftrags zu erhalten;
Bestimmen, ob es notwendig ist oder nicht, eine Sammelreihenfolge von Ausdrucken in einem Fall, in dem der Druckauftrag von mehreren Druckmaschinen (24) ausgeführt wird, gemäß dem Typ des Druckauftrags zu designieren;
wobei das Druckverwaltungsverfahren durch Folgendes gekennzeichnet ist:
Anzeigen der Sammelreihenfolge der Ausdrucke auf einer Anzeigevorrichtung in einem Fall, in dem es notwendig ist, die Sammelreihenfolge zu designieren, und kein Anzeigen der Sammelreihenfolge in einem Fall, in dem es nicht notwendig ist, eine Sammelreihenfolge zu designieren; und
in einem Fall, in dem der Typ von Druckauftrag der Verteilungsauftrag einiger Kopien ist, die Sammelreihenfolge gemäß einer vorbestimmten Bedienungsregel auf der Anzeigevorrichtung anzeigt und die Bedienungsregel eine Bewegungsdistanz eines Bedieners enthält.

## Revendications

1. Système de gestion d'impression comprenant :
un processeur (10) ; et
un dispositif d'affichage,
dans lequel le processeur (10) est configuré pour : en exécutant un programme,
discriminer si un travail d'impression est un travail de groupe (30), un travail de division de pages ou un travail de répartition de nombre d'exemplaires pour obtenir un type du travail d'impression ;
déterminer si oui ou non il est nécessaire de désigner un ordre de collecte d'imprimés dans un cas où le travail d'impression est exécuté par une pluralité de machines d'impression (24), en fonction du type du travail d'impression ;
le système de gestion d'impression étant **caractérisé en ce que** : le processeur (10) est en outre configuré pour :
afficher l'ordre de collecte des imprimés sur le dispositif d'affichage dans un cas où il est nécessaire de désigner l'ordre de collecte, et n'afficher pas l'ordre de collecte dans un cas où il n'est pas nécessaire de désigner un ordre de collecte ; et
dans un cas où le type de travail d'impression est le travail de répartition de nombre d'exemplaires, afficher l'ordre de collecte en fonction d'une règle d'opération prédéterminée sur le dispositif d'affichage, et la règle d'opération inclut une distance de déplacement d'un opérateur.

2. Système de contrôle d'impression selon la revendication 1, dans lequel le processeur (10) est configuré pour :
dans un cas où le type de travail d'impression est le travail de groupe (30), afficher l'ordre de collecte d'une pluralité de travaux constituant le travail de groupe (30) sur le dispositif d'affichage.

3. Système de contrôle d'impression selon la revendication 2, dans lequel le processeur (10) est configuré pour :
afficher l'ordre de collecte en fonction d'un ordre d'impression de chaque travail désigné dans le travail de groupe (30), sur le dispositif d'affichage.

4. Système de contrôle d'impression selon la revendication 1, dans lequel le processeur (10) est configuré pour :
dans un cas où le type de travail d'impression est le travail de division de pages,
afficher l'ordre de collecte d'une pluralité de travaux constituant le travail de division de pages sur le dispositif d'affichage.

5. Système de contrôle d'impression selon la revendication 4, dans lequel le processeur (10) est configuré pour :
afficher l'ordre de collecte en fonction d'un ordre de page prédéterminé du travail d'impression sur le dispositif d'affichage.

6. Système de contrôle d'impression selon la revendication 1, dans lequel le processeur (10) est configuré pour :
dans un cas où le type de travail d'impression est le travail de répartition de nombre d'exemplaires, déterminer qu'il n'est pas nécessaire de désigner l'ordre de collecte.

7. Système de contrôle d'impression selon la revendication 1, dans lequel le processeur (10) est configuré pour :
afficher un graphique représentatif de l'imprimé en association avec une machine d'impression à une destination de sortie et un bac de sortie de la machine d'impression, sur le dispositif d'affichage.

8. Système de contrôle d'impression selon la revendication 7, dans lequel le processeur (10) est configuré pour :
dans un cas où un résultat d'impression d'une pluralité de travaux d'impression existe dans le bac de sortie, afficher le graphique représentatif pour chacun de la pluralité de travaux d'impression, sur le dispositif d'affichage.

9. Système de contrôle d'impression selon la revendication 7, dans lequel le processeur (10) est configuré pour :
afficher une marque indiquant l'ordre de collecte en association avec le graphique représentatif sur le dispositif d'affichage.

10. Système de gestion d'impression selon l'une quelconque des revendications 1 à 9, dans lequel le processeur (10) est en outre configuré pour : en exécutant le programme,
entrer que l'imprimé est collecté ; et
mettre à jour l'ordre de collecte affiché sur le dispositif d'affichage en fonction de l'entrée.

11. Programme comprenant des instructions qui, lorsque le programme est exécuté par un processeur (10) d'un ordinateur, amènent le processeur (10) à exécuter un processus comprenant :
discriminer si un travail d'impression est un travail de groupe (30), un travail de division de pages ou un travail de répartition de nombre d'exemplaires pour obtenir un type du travail d'impression ;
déterminer si oui ou non il est nécessaire de désigner un ordre de collecte d'imprimés dans un cas où le travail d'impression est exécuté par une pluralité de machines d'impression (24), en fonction du type du travail d'impression ;
le programme étant **caractérisé en ce qu'**il comprend des instructions qui amènent le processeur (10) à exécuter :
afficher l'ordre de collecte des imprimés sur un dispositif d'affichage dans un cas où il est nécessaire de désigner l'ordre de collecte, et n'afficher pas l'ordre de collecte dans un cas où il n'est pas nécessaire de désigner un ordre de collecte ; et
dans un cas où le type de travail d'impression est le travail de répartition de nombre d'exemplaires, afficher l'ordre de collecte en fonction d'une règle d'opération prédéterminée sur le dispositif d'affichage, et la règle d'opération inclut une distance de déplacement d'un opérateur.

12. Procédé de gestion d'impression, comprenant :
discriminer si un travail d'impression est un travail de groupe (30), un travail de division de pages ou un travail de répartition de nombre d'exemplaires pour obtenir un type du travail d'impression ;
déterminer si oui ou non il est nécessaire de désigner un ordre de collecte d'imprimés dans un cas où le travail d'impression est exécuté par une pluralité de machines d'impression (24), en fonction du type du travail d'impression ;
le procédé de gestion d'impression étant **caractérisé par** :
afficher l'ordre de collecte des imprimés sur un dispositif d'affichage dans un cas où il est nécessaire de désigner l'ordre de collecte, et n'afficher pas l'ordre de collecte dans un cas où il n'est pas nécessaire de désigner un ordre de collecte ; et
dans un cas où le type de travail d'impression est le travail de répartition de nombre d'exemplaires, afficher l'ordre de collecte en fonction d'une règle d'opération prédéterminée sur le dispositif d'affichage, et la règle d'opération inclut une distance de déplacement d'un opérateur.
